# EUROPÄISCHE PATENTSCHRIFT

(11) **EP 1 503 931 B1**
(45) Veröffentlichungstag und Bekanntmachung des Hinweises auf die Patenterteilung: **31.08.2005**
(21) Anmeldenummer: 03727452.9
(22) Anmeldetag: 08.05.2003
(51) Int. Cl.: B62D 29/00

(54) **LEICHTBAUTEIL FÜR TRÄGERELEMENTE VON KRAFTFAHRZEUGEN**
LIGHTWEIGHT COMPONENT FOR BEARING ELEMENTS OF MOTOR VEHICLES
COMPOSANT LEGER POUR ELEMENTS DE SUPPORT DE VEHICULES AUTOMOBILES

(30) Priorität: 16.05.2002 DE 10221709
(43) Veröffentlichungstag der Anmeldung: 09.02.2005
(73) Patentinhaber: HBPO GmbH, 59552 Lippstadt (DE)
(72) Erfinder: SCHMIDT, Ralf, 59302 Oelde, (DE); HEMMERSMEIER, Ralf, 59557 Lippstadt (DE); BRAUN, Dieter, 33378 Rheda-Wiedenbrück (DE)
(74) Vertreter: Elbertzhagen, Otto
(86) Internationale Anmeldenummer: PCT/EP2003/004824
(87) Internationale Veröffentlichungsnummer: WO 2003/097431

(56) Entgegenhaltungen:
- DE-U- 20 013 208
- US-A- 3 470 598
- US-A1- 2001 025 462

## Beschreibung

Die Erfindung bezieht sich auf ein Leichtbauteil der im Gattungsbegriff des Patentanspruchs 1 näher bezeichneten Art.

Ein solches Leichtbauteil ist aus der Patentschrift EP-A-0 370 342 bekannt. Die überwiegend geschlossenwandige Metalllage dieses Leichtbauteils besteht aus einem Formkörper aus Metallblech, der großformatige Löcher hat, die in deutlichen Abständen voneinander angeordnet sind. Auf diese Löcher sind die im Hohlbereich des Formkörpers angeordneten Versteifungsrippen ausgerichtet, die aus angespritztem Kunststoff bestehen, der durch die Löcher im Formkörper zum Umgreifen des Lochrandes hindurchreicht. In dieser Weise sind für die Versteifungsrippen im Formkörper diskrete Verbindungsstellen gebildet, an denen jeweils eine formschlüssige Verbindung zwischen dem Kunststoff der Versteifungsrippen und dem Metall des Formkörpers besteht.

Bei dem bekannten Leichtbauteil hat der aus Metallblech bestehende Formkörper eine erhebliche Steifigkeit, und er gibt als sogenannter Grundkörper die Grundform für das Leichtbauteil vor. Um diesen Formkörper biegesteifer und torsionssteifer zu machen, sind die an den diskreten Stellen des Formkörpers angespritzten Versteifungsrippen vorgesehen, deren Anordnung von der Lage der Löcher im Formkörper abhängig ist. Aufgrund der wenigen Löcher im Formkörper sowie deren erheblichen Abstände ist die Anzahl der Versteifungsrippen beschränkt, und die Ausbildung der Anbindungsstellen für die Rippen ist nur begrenzt belastbar. Andererseits lassen sich die relativ wenigen Löcher im metallenen Formkörper problemlos von der Fließfront der Kunststoffschmelze erreichen.

Zum anderen sind grundsätzlich Bauteile bekannt, die im Spritzgußverfahren aus Kunststoff hergestellt werden und die eine versteifende Metalleinlage aufweisen. Auf das Angießen von im Hohlbereich socher Bauteile liegende Versteifungsrippen muß hierbei nicht Rücksicht genommen werden. Insoweit ist hier die Durchlässigkeit der Versteifungseinlage für die Kunststoffschmelze beim Spritzgießvorgang leicht daran anzupassen, daß beim fertigen Bauteil die Versteifungseinlage allseitig von dem Kunststoffmaterial ummantelt ist.

### Die Erfindung

Der Erfindung liegt die Aufgabe zugrunde, ein Leichtbauteil der gattungsgemäßen Art zu schaffen, welches hinsichtlich der Fließbedingungen der Kunststoffschmelze beim Spritzvorgang im zugehörigen Spritzgußwerkzeug optimiert ist und bei dem ein inniger Verbund zwischen der Metalllage und dem die Versteifungsrippen bildenden Kunststoff besteht, der zugleich die von den Versteifungsrippen abliegende Außenseite des Leichtbauteils lückenlos kaschiert.

Diese Aufgabe wird bei einem Leichtbauteil der gattungsbildenden Art nach der Erfindung durch die kennzeichnenden Merkmale des Patentanspruchs 1 gelöst.

Für das erfindungsgemäße Leichtbauteil ist von Bedeutung, daß die von den Rippen abliegende Außenseite der Metalleinlage die Angußseite ist, die somit von außen her mit dem Kunststoffmaterial umspritzt worden ist. Um zugleich an der von der Angußseite abliegenden Innenseite der Metalleinlage in dem betreffenden Spritzgußwerkzeug die Versteifungsrippen bilden zu können, wird die besondere Siebstruktur der Metalleinlage dazu genutzt, den Weg der Kunststoffschmelze im Spritzgußwerkzeug zu optimieren. Hier geht es vor allem darum, über die vielzähligen Löcher in der Metalleinlage Durchlässe für die Kunststoffschmelze mit einem jeweils kleinen Querschnitt zu erzielen, die dem Injektionsdruck der Kunststoffschmelze beim Spritzprozeß einen erhöhten Widerstand entgegensetzt. Ferner ist die Bildung eines Fließspaltes an der Angußseite der Metalleinlage zur Werkzeugwandung hin wichtig.

Zum einen kann dadurch die Kunststoffschmelze beim Anguß von außen her auf die Metalleinlage einen Druck ausüben, aufgrund dessen die Metalleinlage in vorteilhafter Weise mit ihrer Innenseite an der Innenseite des Spritzgußwerkzeugs angepreßt wird. Dadurch kann unabhängig davon, ob der flüssige Kunststoff an der Innenseite die Metalleinlage vollständig unterwandert, das Leichtbauteil innenseitig glattflächig ausgebildet werden. Zum zweiten sucht sich die Schmelze den Weg des geringsten Fließwiderstandes und verfüllt den spaltförmigen Raum, der zwischen der Außenseite der Metalleinlage mit den hier an den Löchern vorstehenden Erhebungen und der Außenwand des Spritzgußwerkzeugs besteht. Damit wird eine geschlossene Überdeckung der Metalleinlage an der Außenseite bzw. der Angußseite mittels des Kunststoffmaterials erzielt. Des weiteren erschweren die relativ engen Querschnitte der Löcher in der Metalleinlage ein zu schnelles Vordringen der Kunststoffschmelze in die im Spritzgußwerkzeug von der Angußseite her gesehen unterhalb bzw. hinter der Metalleinlage angeordneten Kanäle zur Ausformung der Versteifungsrippen. Damit wird an der von der Angußseite abgelegenen Innenseite der Metalleinlage ein Voreilen der Front der Kunststoffschmelze gegenüber der sich vom Anguß an der Außenseite der Metalleinlage wegbewegenden Schmelzenfront verhindert. Dies vermeidet, daß die Metalleinlage aufgrund eines höheren hydraulischen Drucks der Kunststoffschmelze von ihrer Innenseite her gegen die nach außen begrenzenden Wandungen des Spritzgußwerkzeugs gepreßt wird. Dadurch wird an der Angußseite der Metalleinlage eine einwandfreie, geschlossene Kunststoffüberdeckung sichergestellt, denn die hierdurch gebildete Außenseite des fertigen Leichtbauteils ist in dessen Einbaulage die ein sehbare Sichtseite, die für das Aussehen des Leichtbauteils eine erhebliche Bedeutung hat.

Vorteilhafte Ausgestaltungsmerkmale der Erfindung ergeben sich aus den Unteransprüchen. Insbesondere ist hier die besondere Gestaltung der an den Löchern vorgesehenen Erhebungen der Metalleinlage an der Angußseite zu erwähnen, die es ermöglicht, die von der Öffnung jedes einzelnen Lochs der Metalleinlage aufgespannte Ebene senkrecht oder nahezu senkrecht zu der Grundfläche der Metalleinlage zu stellen. Insbesondere die als Viertel-Hohlkugel ausgebildete etwa muschelförmige Auswölbung der Erhebungen ermöglicht es, daß die durch das jeweilige Loch hindurchdringende Kunststoffschmelze nach dem Erstarren einen formschlüssig in die vom Muscheldach überdeckte Hohlform an der konkaven Seite der Auswölbung eingebundenen Kopf bildet. Die Vielzahl der in der Metalleinlage vorhandenen Öffnungen und entsprechend die Vielzahl der auf diese Weise gebildeten Kunststoff-Köpfe stellt eine besonders innige, formschlüssige Verbindung zwischen dem Kunststoff und der Metalleinlage sicher.

### Kurzbeschreibung der Zeichnungsabbildungen

Die Erfindung wird nachfolgend anhand der Zeichnung an einem Ausführungsbeispiel noch näher erläutert. Dabei zeigen:
- Fig. 1: einen Ausschnitt aus einer Metalleinlage für ein Leichtbauteil
- Fig. 2: eine perspektivische Ansicht eines Abschnittes eines mit der Metalleinlage gemäß Fig. 1 nach dreidimensionaler Verformung versehenen Leichtbauteils von der Angußseite her gesehen,
- Fig. 3: eine perspektivische Ansicht des Leichtbauteils gemäß Fig. 2 auf dessen Innenseite gesehen,
- Fig. 4: eine im wesentlichen der Fig. 2 entsprechende Ansicht eines Leichtbauteils in weiterer Ausführung und
- Fig. 5: eine perspektivische Ansicht des Leichtbauteils gemäß Fig. 4 auf dessen Innenseite gesehen.

### Bester Weg zur Ausführung der Erfindung

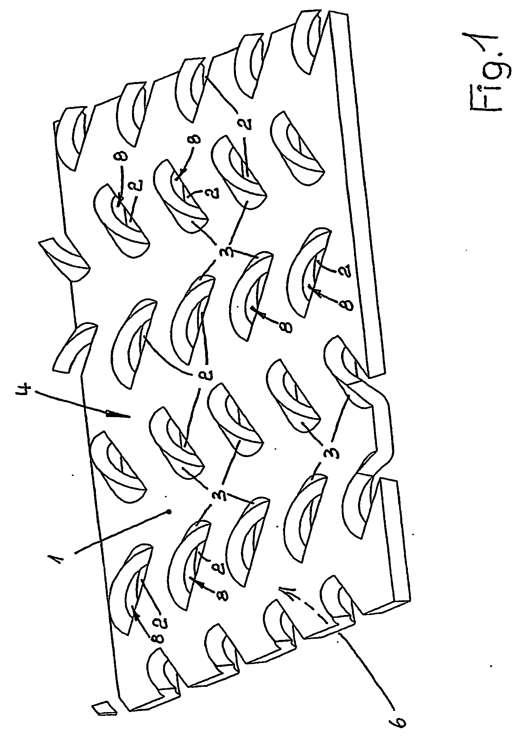

Fig. 1 zeigt im einzelnen einen Abschnitt einer noch nicht dreidimensional verformten Metalleinlage, die ein flächiges Gebilde darstellt und aus einem Stahlblech gefertigt ist. In dieses Stahlblech ist eine Vielzahl von Löchern 2, nämlich von Durchgangslöchern, in besonderer Weise eingearbeitet, wodurch die Metalleinlage 1 eine siebartige Struktur aufweist. Die Metalleinlage 1 ist ähnlich einer Küchenreibe ausgebildet und hat eine strukturierte Außenseite, nämlich eine Angußseite 4, und eine glatte Innenseite 6, an der lediglich die Öffnungen der durchgehenden Löcher 2 vorhanden sind.

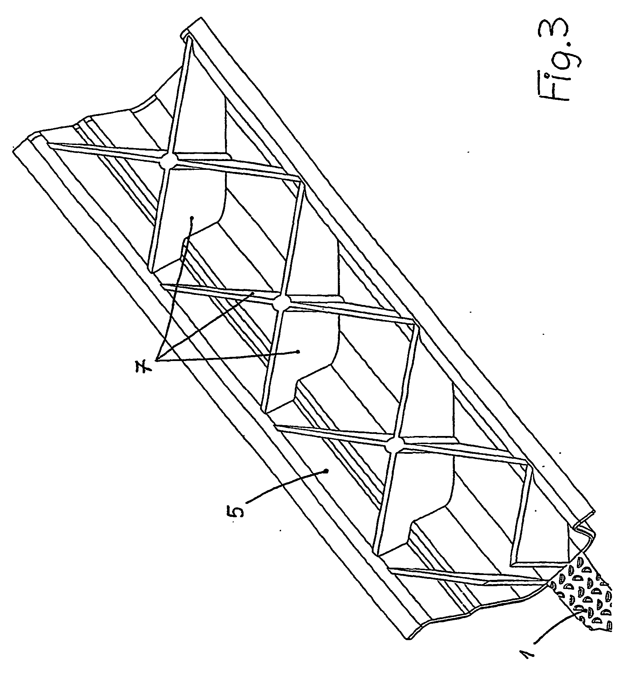

An der äußeren Angußseite 4 stehen aus dem Metallblech der Metalleinlage 1 herausgedrückte Erhebungen 3 vor, die annähernd die Form einer Viertel-Hohlkugel haben. Dadurch haben die Erhebungen 3 in etwa die Form einer offenen Muschel, wobei die halbseitigen Muschelöffnungen 8 an der Angußseite 4 die Öffnungen der Durchgangslöcher 2 bilden. Die Öffnungsebenen der Löcher 2 an der Angußseite 4 stehen nahezu senkrecht zu der Grundfläche der Metalleinlage 1, wobei diese Ebenen der Öffnungen 8 miteinander parallel oder unterschiedlich ausgerichtet sein können. Dies hängt davon ab, wie man die Fließrichtung der Kunststoffschmelze steuern will, die zur Ummantelung der Metalleinlage 1 in ein Spritzgußwerkzeug injiziert wird, in welchem nach dreidimensionaler Verformung die Metalleinlage 1 eingelegt ist. Hierbei geht es darum, an der Angußseite 4 eine vollständige Überdeckung der Metalleinlage 1 zu erzielen und die Kunststoffschmelze zugleich durch die Löcher 2 der Metalleinlage 1 hindurchdringen zu lassen, um in der Spritzgußform an die Innenseite 6 der Metalleinlage 1 anschließende Kanäle zu füllen. Hierdurch werden von dem die Metalleinlage 1 ummantelnden Kunststoff Versteifungsrippen 7 gebildet, die in Fig. 3 zu erkennen sind. Eine der Möglichkeiten der Ausrichtungen der Öffnungen 8 der Löcher 2 an der Angußseite 4 der Metalleinlage 1 besteht, wie in Fig. 1 dargestellt, darin, die Ebenen der Öffnungen 8 in zwei einander rechtwinklig kreuzenden Richtungen anzuordnen. Des weiteren sind die vielzähligen Löcher 2 und entsprechend die vielzähligen Erhebungen 3 an der Angußseite 4 der Metalleinlage 1, soweit es deren zu umspritzenden Bereich betrifft, in fluchtenden Reihen mit regelmäßiger Verteilung angeordnet.

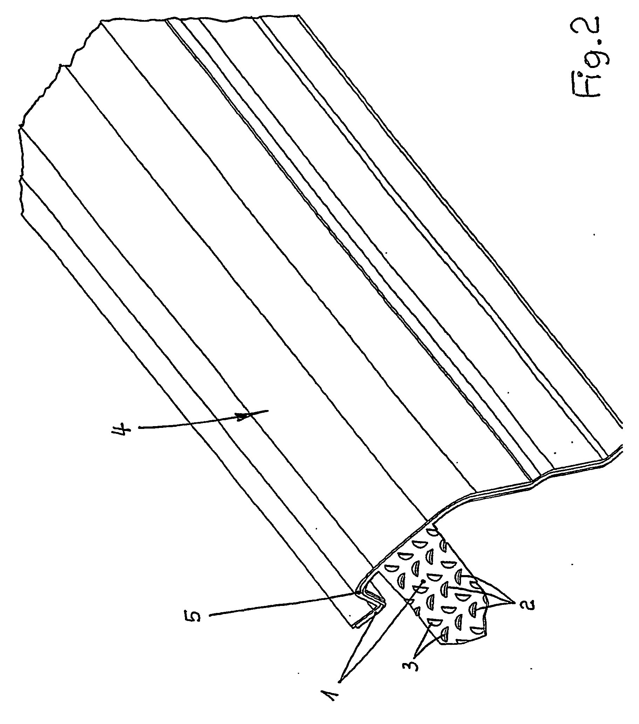

Die Figuren 2 und 3 zeigen ein fertiges Leichtbauteil, welches erkennen läßt, daß die in Fig. 1 wiedergegebene Metalleinlage 1 vor dem Ummanteln im Spritzgußverfahren dreidimensional verformt worden ist, wodurch sich konkave Wölbungen mit Hohlbereichen an der Innenseite 6 der Metalleinlage 1 ergeben, welche die Versteifungsrippen 7 aufnehmen. Fig. 1 zeigt die Ansicht des Leichtbauteils einschließlich einem nicht ummantelt dargestellten Abschnitt der Metalleinlage 1 von der Angußseite 4 her gesehen, und man erkennt hier, daß der Kunststoffmantel 5 die Angußseite 4 der Metalleinlage 1 vollflächig überdeckt. Da der Kunststoffmantel 5 dicker ist als die Erhebungen 3 der Metalleinlage 1 hoch sind, sind die Scheitel der Erhebungen 3 der Metalleinlage 1 an der durch die Angußseite 4 gebildeten Sichtseite des Leichtbauteils im Bereich der Kunststoffoberfläche nicht zu erkennen.

Aus gestalterischen Gründen kann dies an der Sichtseite des Leichtbauteils anders vorgesehen werden, indem man den Kunststoffmantel so dick macht, wie die Erhebungen 3 der Metalleinlage 1 hoch sind. Sowohl aus gestalterischen Gründen als auch im Hinblick auf das Fließverhalten der Kunststoffschmelze beim Spritzvorgang können grundsätzlich die die Löcher 2 umgebenden Erhebungen 3 ebenfalls an der Innenseite 6 der Metalleinlage 1 vorgesehen werden. Auf diese Weise kann der siebartigen Metalleinlage 1 partiell ein unterschiedlicher Durchflußwiderstand für die Kunststoffschmelze gegeben werden, der nicht allein von der Öffnungsweite und -richtung der Löcher 2 sondern auch von der Anordnung der Erhebungen 3 abhängt.

Wie aus Fig. 3 deutlich wird, ist die Anordnung der Versteifungsrippen 7 grundsätzlich unabhängig von der Lochkonfiguration der Metalleinlage 1, von der auch hier ein Abschnitt sichtbar gelassen ist. Die Versteifungsrippen 7 haben an der Metalleinlage 1 solche Anschlußquerschnitte, daß eine Mehr- oder Vielzahl der Löcher 2 bzw. deren Öffnungen an der Innenseite 6 der Metalleinlage 1 überdeckt wird. So können die Anbindungsstellen der Versteifungsrippen 7 an beliebiger Stelle der Metalleinlage 1 vorgesehen werden, Voraussetzung ist lediglich, daß an der jeweiligen Anbindungsstelle die Siebstruktur der Metalleinlage 1 mit den Löchern 2 und den Erhebungen 3 vorhanden ist. Die Metalleinlage 1 kann auch insbesondere Rand- oder Endbereiche haben, die ohne die Siebstruktur ausgeführt und entsprechend nicht mit dem Kunststoffmaterial umspritzt sind. Diese Bereiche dienen vornehmlich zur Ausbildung oder Anbringung der Befestigungsmittel, über die das Leichtbauteil an der Karosserie des betreffenden Fahrzeugs montiert wird oder mittels derer Anbauten an dem Leichtbauteil befestigt werden.

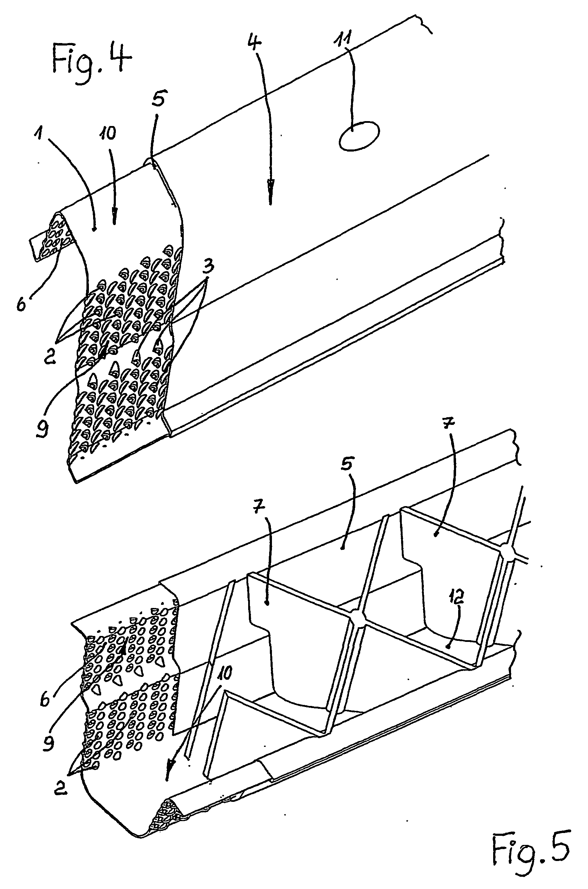

Die Figuren 4 und 5 veranschaulichen eine leicht modifizierte Ausführungsform eines Leichtbauteils, bei dem die Perforation, also die Löcher 2 mit ihren Erhebungen 3 sich nicht über die Gesamtfläche der Metalleinlage 1 erstreckt. So weist die Metalleinlage 1 einen perforierten Wandungungsteil 9 und einen geschlossenen Wandungsteil 10 auf, letzterer ist dementsprechend nicht mit solchen Löchern versehen, welche eine Verbindung der Kunststoffstrukturen an der Angußseite 4 und an der Innenseite 6 der Metalleinlage 1 ermöglichten.

Der geschlossene Wandungsteil 10 der Metalleinlage 1 erstreckt sich zumindest um den Kunststoff-Anguß 11 herum, der sich an der Außenseite 4 des Leichtbauteils und somit auch an der Außenseite der Metalleinlage 1 befindet. Ebenso kann der geschlossene Wandungsteil 10 der Metalleinlage 1 an einer solchen Stelle vorgesehen sein, an der ein Fließkanal im Kunststoff-Spritzgußwerkzeug mündet und von wo sich über die Metalleinlage 1 eine Kunststoff-Fließfront ausbreitet. Der Grund ist, beim Umspritzen der Metalleinlage 1 die Front der Kunststoffschmelze zunächst über eine bestimmte Wegstrecke über die Außenseite 4 der Metalleinlage 1 zu führen. Je nach der Konfiguration des Leichtbauteils ist dies günstig, um die Metalleinlage in der Spritzgußform nicht zu verschieben und nicht zu deformieren.

Der geschlossene Wandungsteil der Metalleinlage 1 kann aber auch dazu dienen, die Kunststoff-Schmelze beim Spritzgießvorgang nur aus bestimmten Richtungen und in vorbestimmten Mengen in diejenigen Kanäle der Spritzgußform vordringen zu lassen, in denen sich die Versteifungsrippen 7 ausbilden. In diesem Falle überspannt der geschlossene Wandungsteil 10 der Metalleinlage 1 denjenigen Bereich, in welchem an der Innenseite 6 der Metalleinlage 1 die Versteifungsrippen 7 nicht angebunden sind. Folglich bildet sich der Kunststoffmantel 5 an der Innenseite 6 der Metalleinlage 1 nur im Bereich der perforierten Wandungsteile 9 und nicht an der Innenseite 12 der geschlossenen Wandungsteile 10 aus.

Dementsprechend besteht bei dem fertigen Leichtbauteil die formschlüssige Anbindung der Versteifungsrippen 7 lediglich an den mit den Löchern 2 versehenen Wandungsteilen 9 der Metalleinlage 1. In der Regel befinden sich diese perforierten Wandungsteile 9 an einander gegenüberliegenden Seiten der in die Metalleinlage 1 eingeformten Hohlstellen. So wird trotz der fehlenden Anbindung der Versteifungsrippen 7 an die geschlossenen Wandungsteile 10 der Metalleinlage 1 eine hohe Steifigkeit des Leichtbauteils erzielt.

Letztlich trägt der geschlossene Wandungsteil 10 der Metalleinlage 1 dazu bei, an der Außenseite 4 des Leichtbauteils in den betreffenden Bereichen eine besonders glatte Oberfläche des Kunststoff-Mantels 5 zu erzielen. Gerade in der Einbaulage des Leichtbauteils wird in vielen Fällen derjenige Bereich zur sichtbaren Seite hin angeordnet, bei dem es sich um den Scheitelbereich der in das Formteil eingeformten Hohlstellen handelt. In diesem Bereich wird oft ein U-förmiger Querschnitt des Leichtbauteils vorgesehen, wobei die U-Öffnung von der einsehbaren Seite des Leichtbauteils in der Einbaulage wegliegend angeordnet wird.

## Patentansprüche

1. Leichtbauteil für biege- und torsionssteife Trägerelemente von Kraftfahrzeugen, insbesondere für Frontend-Montageträger von PKWS oder dergl., in Gestalt eines flächigen, dreidimensional verformten Gebildes mit einer mit Durchgangslöchern (2) sowie daneben vorstehenden Erhebungen (3) versehenen Metalleinlage (1), welche die flächige, dreidimensional verformte Grundform aufweist, und mit Versteifungsrippen (7), die zumindest einseitig an dem flächigen Gebilde in daran durch die dreidimensionale Formgebung gebildeten Hohlstellen angeordnet sind, wobei die Metalleinlage (1) von einer Angußseite (4) her mit einem Kunststoff umspritzt ist, der an der Angußseite (4) eine Kunststoffschicht (5) und durch die Durchgangslöcher (2) der Metalleinlage (1) hindurchreichend die Versteifungsrippen (7) bildet,
**dadurch gekennzeichnet,**
**daß** die Durchgangslöcher (2) in der Metalleinlage (1) in einer Vielzahl mit regelmäßiger Verteilung nach Art einer Siebstruktur angeordnet sind,
**daß** die Erhebungen (3) bei jedem der Durchgangslöcher (2) an der Metalleinlage (1) an der Angußseite (4) vorstehen und ihre Höhe zumindest der Dicke der Kunststoffschicht (5) entspricht
und **daß** die Versteifungsrippen (7) einen über eine Mehr- oder Vielzahl der Durchgangslöcher (2) in der Metalleinlage (1) hinwegreichenden Anschlußquerschnitt haben.

2. Leichtbauteil nach Anspruch 1,
**dadurch gekennzeichnet,**
**daß** die Angußseite (4) in der Einbaulage die Sichtseite bildet, an der die Dicke der Kunststoffschicht (5) größer als die Höhe der Erhebungen (3) an den Löchern (2) ist, und entsprechend die Sichtseite im umspritzten Bereich vollflächig von dem Kunststoff gebildet ist.

3. Leichtbauteil nach Anspruch 1 oder 2,
**dadurch gekennzeichnet,**
**daß** an der der Angußseite (4) abgelegenen Innenseite (6) der durch die Löcher (2) der Metalleinlage (1) hindurchgeflossene Kunststoff mit seiner Oberfläche mit der Innenseite (6) der Metalleinlage (1) zumindest bündig liegt oder sich darüber hinweg erstreckt.

4. Leichtbauteil nach einem der Ansprüche 1 - 3,
**dadurch gekennzeichnet,**
**daß** die Erhebungen (3) aus der Grundfläche der Metalleinlage (1) herausgewölbte Ausbuchtungen sind, die halbseitige Öffnungen (8) haben, welche die Öffnungen der Löcher (2) in der Metalleinlage (1) bilden.

5. Leichtbauteil nach Anspruch 4,
**dadurch gekennzeichnet,**
**daß** die Erhebungen (3) annähernd die Form einer Viertel-Hohlkugel haben.

6. Leichtbauteil nach Anspruch 4 oder 5,
**dadurch gekennzeichnet,**
**daß** die entsprechend den Erhebungen (3) aus der Grundfläche der Metalleinlage (1) herausgestellten Öffnungen (8) der Löcher (2) an der Angußseite (4) je in einer Ebene liegen, die senkrecht oder annähernd senkrecht zu der Grundfläche der Metalleinlage (1) steht.

7. Leichtbauteil nach einem der Ansprüche 4 - 6,
**dadurch gekennzeichnet,**
**daß** die Öffnungen (8) der Löcher (2) an den herausgewölbten Erhebungen (3) der Metalleinlage (1) in Ebenen liegen, die miteinander parallel sind.

8. Leichtbauteil nach einem der Ansprüche 4 - 6,
**dadurch gekennzeichnet,**
**daß** die Öffnungen (8) der Löcher (2) an den herausgewölbten Erhebungen (3) der Metalleinlage (1).in zwei oder mehrere Gruppen unterteilt sind, wobei die Öffnungen (8) der Löcher (2) einer Gruppe in miteinander parallelen Ebenen liegen und die Lochebenen der Gruppen winklig zueinander stehen.

9. Leichtbauteil nach Anspruch 7 oder 8,
**dadurch gekennzeichnet,**
**daß** die in miteinander parallelen Ebenen liegenden Öffnungen (8) der Löcher (2) an den herausgewölbten Erhebungen (3) der Metalleinlage (1) in die gleiche, zur jeweiligen Lochebene senkrechte Richtung parallel oder annähernd parallel zur Grundfläche der Metalleinlage (1) zeigen.

10. Leichtbauteil nach einem der Ansprüche 1 - 9,
**dadurch gekennzeichnet,**
**daß** die Erhebungen (3) an den Löchern (2) zum Teil an der Innenseite (6) der Metalleinlage (1) angeordnet sind.

11. Leichtbauteil nach einem der Ansprüche 1 - 10,
**dadurch gekennzeichnet,**
**daß** die Metalleinlage (1) umspritzte sowie nicht umspritzte Bereiche aufweist und die Siebstruktur mit den Löchern (2) sowie den Erhebungen (3) nur in den umspritzten Bereichen vorhanden ist.

12. Leichtbauteil nach einem der Ansprüche 1 - 11,
**dadurch gekennzeichnet,**
**daß** in der Umgebung der zumindest einen an der Angußseite (4) liegenden Angußstelle (11) oder Mündungsstelle eines Fließkanals für den Kunststoff die Metalleinlage (1) einen geschlossenen Wandungsteil (10) hat, der entsprechend in einem Abstand von der Angußstelle (11) in einen mit den Löchern (2) versehenen Wandungsteil (9) übergeht, an den an der Innenseite (6) der Metalleinlage (1) die Versteifungsrippen (7) anschließen.

## Revendications

1. Composant léger d'éléments de support résistants à la flexion et à la torsion pour véhicules automobiles, notamment pour supports de montage de blocs avant de voitures particulières ou analogues, en forme d'une structure en nappe, tridimensionnelle, avec un intercalaire métallique (1) pourvu de trous de passage (2) ainsi que d'élévations (3) en saillie à côté de ceux-ci, lequel intercalaire métallique présente la forme de base en nappe, tridimensionnelle, et avec des nervures de raidissement (7) qui sont associées, au moins d'un côté, à la structure en nappe, dans des cavités formées par la conception tridimensionnelle, l'intercalaire métallique (1) étant enrobé par injection, à partir d'un côté d'injection (4), avec une matière plastique qui forme une couche de matière plastique (5) sur le côté d'injection (4) et qui forme les nervures de raidissement (7) en passant à travers les trous de passage (2) de l'intercalaire métallique (1),
**caractérisé en ce que**
les trous de passage (2) sont disposés, répartis régulièrement, en grand nombre, dans l'intercalaire métallique (1), à la manière de la structure maillée d'un tamis,
**en ce que** les élévations (3) sont en saillie par rapport à chaque trou de passage (2) de l'intercalaire métallique (1), sur le côté d'injection (4), et que leur hauteur correspond au moins à l'épaisseur de la couche de matière plastique (5),
et **en ce que** les nervures de raidissement (7) présentent une section transversale de raccordement qui s'étend sur plusieurs ou sur de nombreux trous de passage 2 de l'intercalaire métallique (1).

2. Elément léger selon la revendication 1,
**caractérisé en ce que**
le côté d'injection (4) forme, à l'état monté, le côté visible, sur lequel l'épaisseur de la couche de matière plastique (5) est plus grande que la hauteur des élévations (3) voisines des trous (2), et que le côté visible est adéquatement formé en nappe sur toute la surface par la matière plastique, dans la zone enrobée.

3. Elément léger selon la revendication 1 ou 2,
**caractérisé en ce que**,
sur la face interne (6), opposée au côté d'injection (4), la surface supérieure de la matière plastique écoulée à travers les trous (2) de l'intercalaire métallique (1) est au moins au même niveau que la face interne (6) de l'intercalaire métallique (1) ou s'étend au-delà de celle-ci.

4. Elément léger selon l'une des revendications 1 à 3,
**caractérisé en ce que**
les élévations (3) sur la surface de base de l'intercalaire métallique (1) sont des renflements convexes qui présentent des orifices d'un demi côté, lesquels forment les ouvertures des trous (2) dans l'intercalaire métallique (1).

5. Elément léger selon la revendication 4,
**caractérisé en ce que**
les élévations (3) présentent approximativement la forme d'un quart de sphère creuse.

6. Elément léger selon la revendication 4 ou 5,
**caractérisé en ce que**
les ouvertures (8) des trous (2), dégagées de la surface de base de l'intercalaire métallique (1) adéquatement aux élévations (3), sont situées chacune, sur le côté d'injection (4), dans un plan perpendiculaire ou approximativement perpendiculaire à la surface de base de l'intercalaire métallique (1).

7. Elément léger selon l'une des revendications 4 à 6,
**caractérisé en ce que**
les ouvertures (8) des trous (2), à l'endroit des élévations convexes (3) de l'intercalaire métallique (1), sont situées dans des plans parallèles les uns aux autres.

8. Elément léger selon l'une des revendications 4 à 6,
**caractérisé en ce que**
les ouvertures (8) des trous (2), à l'endroit des élévations convexes (3) de l'intercalaire métallique (1), sont divisées en deux ou plusieurs groupes, les ouvertures (8) des trous (2) d'un groupe étant situées dans des plans parallèles les uns aux autres, et les plans des trous des groupes étant disposés angulairement les uns par rapport aux autres.

9. Elément léger selon la revendication 7 ou 8,
**caractérisé en ce que**
les ouvertures (8) des trous (2), à l'endroit des élévations convexes (3) de l'intercalaire métallique (1), situées dans des plans parallèles les uns aux autres, sont orientées dans la même direction perpendiculaire au plan respectif des trous, parallèlement ou approximativement parallèlement à la surface de base de l'intercalaire métallique (1).

10. Elément léger selon l'une des revendications 1 à 9,
**caractérisé en ce que**
les élévations (3), à l'endroit des trous (2), sont en partie disposés sur la face intérieure (6) de l'intercalaire métallique (1).

11. Elément léger selon l'une des revendications 1 à 10,
**caractérisé en ce que**
l'intercalaire métallique (1) présente des zones enrobées par injection ainsi que des zones non enrobées par injection, et que la structure maillée, avec les trous (2) ainsi que les élévations (3), n'est prévue que dans les zones enrobées par injection.

12. Elément léger selon l'une des revendications 1 à 11,
**caractérisé en ce que**,
dans le voisinage du point d'injection (11) ou du point de débouchement d'un canal d'écoulement de la matière plastique au moins prévu sur le côté d'injection (4), l'intercalaire métallique (1) présente une partie de paroi fermée (10) qui, adéquatement, à une distance du point d'injection (11), se transforme en une partie de paroi pourvue de trous (2), à laquelle font suite les nervures de raidissement (7), sur la surface intérieure (6) de l'intercalaire métallique (1).

## Claims

1. Lightweight component for bearing elements of motor vehicles which are stiff in bending and torsion, more particularly for front end assembly supports of passenger vehicles or the like, in the form of a flat three-dimensionally shaped structure having a metal insert (1) provided with through holes (2) and protrusions (3) protruding alongside same wherein the metal insert has the flat three-dimensionally deformed basic shape, and the component having reinforcement ribs (7) which are arranged on at least one side on the flat structure in the hollow spaces formed therein through the three-dimensional shaping, whereby the metal insert (1) is encased from the casting side (4) with a plastics which forms a plastics layer (5) on the casting side (4) and passes through the through holes (2) in the metal insert (1) to form the reinforcement ribs (7)
**characterised in that**
the through holes (2) are arranged in numbers evenly spread out in the metal insert (1) in the manner of a sieve structure,
that the protrusions (3) at each of the through holes (2) protrude on the metal insert (1) on the casting side (4) and their height corresponds at least to the thickness of the plastics layer (5), and
that the reinforcement ribs (7) have a connecting cross-section which extends over a number of the full-length holes (2) in the metal insert (1).

2. Lightweight component according to claim 1,
**characterised in that**
the casting side (4) forms in the installed position the visible side where the thickness of the plastics (5) is greater than the height of the protrusions (3) at the holes (2), and correspondingly the visible side in the injected region is formed entirely by the plastics.

3. Lightweight component according to claim 1 or 2,
**characterised in that**
on the inside (6) away from the casting side (4) the plastics which has flowed through the holes (2) of the metal insert (1) at least lies with its surface flush with the inside (6) of the metal insert (1) or extends beyond same.

4. Lightweight component according to one of claims 1 to 3,
**characterised in that**
the protrusions (3) are bulged areas curved out from the base surface of the metal insert (1) and have half-width openings (8) which form the openings of the holes (2) in the metal insert (1).

5. Lightweight component according to claim 4,
**characterised in that**
the protrusions (3) have approximately the shape of a quarter hollow sphere.

6. Lightweight component according to claim 4 or 5,
**characterised in that**
the openings (8) of the holes (2) formed corresponding to the protrusions (3) from the base surface of the metal insert (1) lie on the casting side (4) in a plane which stands perpendicular or practically perpendicular to the base surface of the metal insert (1).

7. Lightweight component according to one of claims 4 to 6,
**characterised in that**
the openings (8) of the holes (2) lie on the curved-out protrusions (3) of the metal insert (1) in planes which are parallel with each other.

8. Lightweight component according to one of claims 4 to 6,
**characterised in that**
the openings (8) of the holes (2) on the curved-out protrusions (3) of the metal insert (1) are divided into two or more groups whereby the openings (8) of the holes (2) of one group lie in planes parallel with each other and the hole planes of the groups are at an angle to each other.

9. Lightweight component according to claim 7 or 8,
**characterised in that**
the openings (8) of the holes (2) lying in parallel planes on the curved-out protrusions (3) of the metal insert (1) point in the same direction perpendicular to the relative hole plane parallel or approximately parallel to the base surface of the metal insert (1).

10. Lightweight component according to one of claims 1 to 9,
**characterised in that**
the protrusions (3) at the holes (2) are arranged in part on the inside (6) of the metal insert (1).

11. Lightweight component according to one of claims 1 to 10,
**characterised in that**
the metal insert (1) has injected and non-injected areas and the sieve structure with the holes (2) and protrusions (3) is only provided in the injected areas.

12. Lightweight component according to one of claims 1 to 11,
**characterised in that**
in the surroundings of the at least one casting site (11) lying on the casting side (4) or openings of a flow channel for the plastics, the metal insert (1) has a closed wall part (10) which changes correspondingly at a distance from the casting site (11) into a wall part (9) which is provided with the holes (2) and is adjoined on the inside (6) of the metal insert (1) by the reinforcement ribs (7).
